# EUROPEAN PATENT APPLICATION

(11) **EP 4 819 349 A1**
(43) Date of publication of application: **07.10.2026**
(21) Application number: 25843585.8
(22) Date of filing: 30.06.2025
(51) Int. Cl.: H01M 50/457

(54) **SEPARATOR, SECONDARY BATTERY, AND ELECTRICAL APPARATUS**

(30) Priority: 26.07.2024 CN 202411017933
(71) Applicant: Sunwoda Mobility Energy Technology Co., Ltd., Shenzhen, Guangdong 518107 (CN)
(72) Inventor: LIN, Feng, Shenzhen, Guangdong 518107 (CN); CHENG, Zhong, Shenzhen, Guangdong 518107 (CN)
(74) Representative: Metida
(86) International application number: PCT/CN2025/105909
(87) International publication number: WO 2026/021203

(57) **Abstract**

The present disclosure discloses a separator, a secondary battery, and an electrical device. The separator includes a substrate and an adhesive coating disposed on at least one surface of the substrate; the adhesive coating includes organic coatings and connecting bridges, the organic coatings are disposed on the at least one surface of the substrate, and two immediately adjacent organic coatings of the organic coatings are connected by the connecting bridges; a width of the connecting bridges is smaller than a maximum dimension of the organic coatings in a width direction of the connecting bridges. The separator of the present disclosure ensures continuous diffusion and wetting of an electrolyte on a surface of the adhesive coating, effectively improving the electrolyte wettability. The organic coatings are disposed on the surface of the substrate at equal intervals, causing a small blockage to the substrate. After coating, the Gurley value of the separator is just slightly increased, and the hindrance to lithium-ion transport is low, which is beneficial for reducing the internal resistance of the secondary battery, enhancing the adhesion between the separator and the electrode plates, and reducing the occurrence of displacement or misalignment between the positive electrode plate and the negative electrode plate during the production process of the secondary battery.

## Description

### TECHNICAL FIELD

The present disclosure relates to the technical field of secondary batteries, specifically to a separator, a secondary battery, and an electrical device.

### BACKGROUND

In a secondary battery, a separator primarily serves to isolate the positive electrode and the negative electrode, preventing short circuits, while also allowing ionic conduction to facilitate electrochemical reactions. The separator significantly influences the cycle performance, rate capability, and safety of the battery. As the energy density of the secondary battery continues to increase, the performance requirements for the separator are also gradually raising.

Therefore, this disclosure is proposed.

### SUMMARY OF THE DISCLOSURE

An objective of the present disclosure is to provide a separator, a secondary battery, and an electrical device. The separator ensures continuous diffusion and wetting of an electrolyte on a surface of an adhesive coating, effectively improving the electrolyte wettability, reducing the internal resistance of the separator, and enhancing the adhesion between the separator and electrode plates.

To achieve the above objective, in a first aspect of the present disclosure, a separator is provided, including a substrate and an adhesive coating disposed on at least one surface of the substrate;
the adhesive coating includes organic coatings and connecting bridges, the organic coatings are disposed on the at least one surface of the substrate, and two immediately adjacent organic coatings of the organic coatings are connected by the connecting bridges;
a width of the connecting bridges is smaller than a maximum dimension of the organic coatings in a width direction of the connecting bridges.

As an embodiment of the present disclosure, each of the organic coatings is in a form of a circular dot, and the width of the connecting bridges is smaller than a diameter of the organic coatings that are each in the form of the circular dot.

As an embodiment of the present disclosure, the diameter of the organic coatings that are each in the form of the circular dot is in a range of from 50 µm to 600 µm.

As an embodiment of the present disclosure, a thickness of the organic coatings is in a range of from 1 µm to 20 µm.

As an embodiment of the present disclosure, the width of the connecting bridges is in a range of from 20 µm to 200 µm, and a length of the connecting bridges is in a range of from 0.1 mm to 1 mm.

As an embodiment of the present disclosure, a coverage area percentage of the adhesive coating on the at least one surface (the coated surface) of the substrate is 8% to 51%, and an areal density of the adhesive coating is 0.2 g/m² to 1.5 g/m².

As an embodiment of the present disclosure, the adhesive coating includes a polymer and an adhesive agent, where a mass ratio of the polymer to the adhesive agent is (3~9):1.

As an embodiment of the present disclosure, the polymer includes at least one selected from the group consisting of polyvinylidene fluoride (PVdF), a poly(vinylidene fluoride-co-hexafluoropropylene) (PVdF-HFP) copolymer, polytetrafluoroethylene (PTFE), polymethacrylate, and an acrylate copolymer derivative; and/or
a molecular structure of the adhesive agent includes at least one polar functional group, and the polar functional group includes at least one selected from the group consisting of C=O, -CN, -OH, -COOH, -COOLi, -COONa, -CONH-, and -NHCOO-.

In a second aspect of the present disclosure, a secondary battery is provided, including a positive electrode plate, a negative electrode plate, and a separator positioned between the positive electrode plate and the negative electrode plate, where the separator is the separator described above.

In a third aspect of the present disclosure, an electrical device is provided, including the aforementioned secondary battery.

The beneficial effects of the present disclosure are as follows. The separator of the present disclosure ensures continuous diffusion and wetting of an electrolyte on a surface of an adhesive coating, effectively improving the electrolyte wettability. The organic coatings are disposed on a surface of the separator substrate, causing a small blockage to the substrate. After coating, the Gurley value of the separator is just slightly increased, and the hindrance to lithium-ion transport is low, which is beneficial for reducing the internal resistance of the secondary battery and improving the long-term cycling performance of the secondary battery. This also avoids the severe pore clogging issue of the adhesive coating caused by full-coverage coating, effectively improves the ionic conductivity, reduces the internal resistance of the separator, enhances the adhesion between the separator and the electrode plates, and reduces the occurrence of misalignment or displacement between the positive electrode plate and the negative electrode plate during the production process of the secondary battery.

### BRIEF DESCRIPTION OF THE DRAWINGS

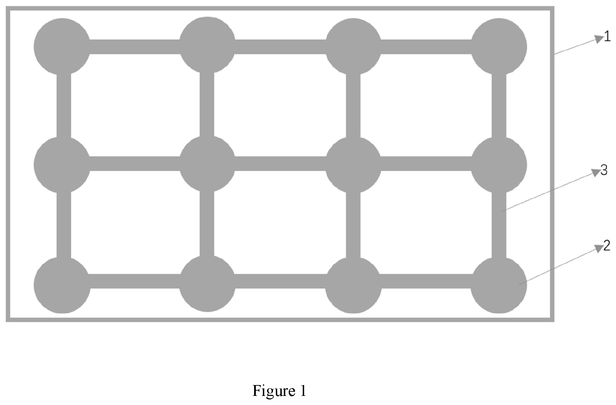

Figure 1 is a structural schematic diagram of the adhesive coating of the present disclosure.

### DETAILED DESCRIPTION

To make the objective, technical solutions, and advantages of the embodiments of the present disclosure clearer, the technical solutions in the embodiments of the present disclosure will be clearly and completely described below. Obviously, the described embodiments are only a part of the embodiments of the present disclosure, not all of them. Based on the embodiments of the present disclosure, all other embodiments obtained by those skilled in the art without creative effort shall fall within the protection scope of the present disclosure.

In the present disclosure, when a technical solution includes technical features described in an open-ended manner, the technical solution includes a close-ended technical solution composed of the listed features and an open-ended technical solution including the listed features.

In the present disclosure, a numerical range is involved. Unless otherwise specified, the numerical range is considered continuous and includes the minimum and maximum values of the range, as well as every value between the minimum and maximum values. Further, when the numerical range refers to an integer, it includes every integer between the minimum and maximum values of the range. Furthermore, when multiple ranges are provided to describe a feature or characteristic, such ranges can be combined. In other words, unless otherwise specified, all ranges disclosed herein should be understood to include any and all sub-ranges subsumed therein.

In the present disclosure, there is no particular limitation on the specific dispersion and stirring methods.

Unless otherwise specified, components, raw materials, or instruments used in the various examples and comparative examples of the present disclosure are all commercially available, and the components or raw materials used in each parallel experiment are of the same type.

In an embodiment of the present disclosure, a separator is provided, including a substrate and an adhesive coating disposed on at least one surface of the substrate;

As shown in FIG. 1, the adhesive coating 1 includes organic coatings 2 and connecting bridges 3, where the organic coatings are disposed on a surface of the substrate, and two immediately adjacent organic coatings of the organic coatings are connected by the connecting bridges;
a width of the connecting bridges is smaller than a maximum dimension of the organic coatings in a width direction of the connecting bridges.

In the present disclosure, by arranging organic coatings on a substrate and connecting the organic coatings via connecting bridges, the separator ensures continuous diffusion and wetting of an electrolyte on a surface of an adhesive coating, effectively improving the electrolyte wettability. The organic coatings are disposed on a surface of the separator substrate at equal intervals, causing a small blockage to the substrate. After coating, the Gurley value of the separator is very slightly increased, and the hindrance to the lithium-ion transport is low, which is beneficial for reducing the internal resistance of the secondary battery and improving the long-term cycling performance of the secondary battery. This also avoids the severe pore clogging issue of the adhesive coating caused by full-coverage coating, effectively improves the ionic conductivity, reduces the internal resistance of the separator, enhances the adhesion between the separator and the electrode plates, and reduces the occurrence of misalignment or displacement between the positive electrode plate and the negative electrode plate during the production process of the secondary battery.

The connecting bridges described in the present disclosure effectively improve the air permeability, reduce the impedance, and provide a fast-flowing channel for the electrolyte, which facilitates rapid wetting of the electrolyte on the separator and effectively increases the wicking speed of the electrolyte. When a width of the connecting bridges is smaller than a maximum dimension of the organic coatings in a width direction of the connecting bridges, the connecting bridges can ensure the continuity of wetting, while achieving better air permeability, thereby effectively improving the air permeability of the adhesive coating and the electrolyte wicking speed.

In an embodiment, each of the organic coatings is in a form of a circular dot, and the width of the connecting bridges is smaller than a diameter of the organic coatings that are each in the form of the circular dot.

In an embodiment, the diameter of the organic coatings that are each in the form of the circular dot is in a range of from 50 µm to 600 µm, for example, it may be 50 µm, 100 µm, 200 µm, 300 µm, 400 µm, 500 µm, 600 µm, or a range defined by any two of these values. When the diameter of the organic coatings that are each in the form of the circular dot is in the range of from 50 µm to 600 µm, the air permeability of the adhesive coating is not affected, while the electrolyte wicking speed is effectively increased, the internal resistance is reduced, and the adhesion between the separator and the electrode plates is enhanced.

In an embodiment, a thickness of the organic coatings is in a range of from 1 µm to 20 µm, for example, it can be 1 µm, 2 µm, 4 µm, 5 µm, 8 µm, 10 µm, 12 µm, 15 µm, 20 µm, or a range defined by any two of these values. When the thickness of the adhesive coating is in a range of from 1µm to 20 µm, the hindrance of the organic coatings to lithium-ion transport is low, and the air permeability of the adhesive coating, the impedance, the adhesion, and the electrolyte wicking speed are all improved.

In an embodiment, the width of the connecting bridges is in a range of from 20 µm to 200 µm, for example, it can be 20 µm, 40 µm, 80 µm, 100 µm, 200 µm, or a range defined by any two of these values. When the width of the connecting bridges is in a range of from 20 µm to 200 µm, the continuity of wetting can be ensured, and meanwhile a better air permeability is achieved, thereby effectively enhancing the air permeability of the adhesive coating and the electrolyte wicking speed.

In an embodiment, the organic coatings are disposed on the surface of the substrate at substantially equal intervals. The substantially equal intervals mean that a deviation of the intervals between the organic coatings on the substrate surface is within 20%.

In an embodiment, a length of the connecting bridges is in a range of from 0.1 mm to 1 mm, for example, it can be 0.1 mm, 0.2 mm, 0.3 mm, 0.4 mm, 0.5 mm, 0.6 mm, 0.7 mm, 0.8 mm, 0.9 mm, 1 mm, or a range defined by any two of these values. When the spacing of the adhesive coating is in a range of from 0.1 mm to 1 mm, it helps to improve the electrolyte wicking speed, poses a small hindrance to lithium ion transport, and improves the air permeability of the adhesive coating, the impedance, the adhesion, and the electrolyte wicking speed.

In an embodiment, a coverage area percentage of the adhesive coating on the substrate surface is in a range of from 8% to 51%, for example, it can be 8%, 10%, 20%, 30%, 40%, 51%, or a range defined by any two of these values.

In an embodiment, an areal density of the adhesive coating is in a range of from 0.2 g/m² to 1.5 g/m², for example, it can be a range of 0.2 g/m², 0.4 g/m², 0.6 g/m², 0.8 g/m², 1 g/m², 1.2 g/m², 1.5 g/m², or a range defined by any two of these values. In the present disclosure, the areal density of the adhesive coating refers to a weight of the adhesive coating per unit area on one side of the substrate.

In an embodiment, the areal density of the adhesive coating is in a range of from 0.5 g/m² to 1.1 g/m².

In an embodiment, the adhesive coating includes a polymer and an adhesive agent, where a mass ratio of the polymer to the adhesive agent is (3-9):1, for example, it can be 3:1, 4:1, 5:1, 6:1, 8:1, 9:1, or a range defined by any two of these values.

In an embodiment, the polymer includes at least one selected from the group consisting of polyvinylidene fluoride (PVdF), a poly(vinylidene fluoride-co-hexafluoropropylene) (PVdF-HFP) copolymer, polytetrafluoroethylene (PTFE), polymethacrylate, and an acrylate copolymer derivative.

In an embodiment, a molecular structure of the adhesive agent includes at least one polar functional group, and the polar functional group includes at least one selected from the group consisting of C=O, -CN, -OH, -COOH, -COOLi, -COONa, -CONH-, and -NHCOO-. The presence of the at least one polar functional group in the molecular structure of the adhesive agent allows strong polar interactions with the polymer in the adhesive coating, thereby further enhancing the adhesion between the adhesive coating and the substrate and preventing the adhesive coating from powdering or peeling off.

In an embodiment, the adhesive agent includes at least one selected from the group consisting of an acrylate copolymer, an acrylonitrile copolymer, polyvinyl alcohol, polyacrylamide, and polyurethane.

In an embodiment, the substrate is a polymer substrate or a composite substrate composed of a polymer substrate and a heat-resistant coating. The polymer substrate includes at least one selected from the group consisting of a polyolefin substrate, a polyethylene terephthalate (PET) nonwoven substrate, a polyimide nonwoven substrate, and a polyvinylidene fluoride (PVdF) porous substrate. The heat-resistant coating includes at least one selected from the group consisting of an alumina heat-resistant coating, a boehmite heat-resistant coating, a silica heat-resistant coating, a cellulose fiber heat-resistant coating, a composite heat-resistant layer composed of a cellulose fiber and alumina, a composite heat-resistant layer composed of a cellulose fiber and boehmite, an aramid heat-resistant layer, a composite heat-resistant layer composed of aramid and alumina, a composite heat-resistant layer composed of aramid and boehmite, a polyimide heat-resistant layer, a composite heat-resistant layer composed of polyimide and alumina, a composite heat-resistant layer composed of polyimide and boehmite, a zirconium oxide heat-resistant layer, an aluminum hydroxide heat-resistant layer, and a titanium dioxide heat-resistant layer.

In an embodiment, a thickness of the substrate is in a range of from 4 µm to 20 µm, for example, it can be 4 µm, 5 µm, 8 µm, 10 µm, 12 µm, 15 µm, 20 µm, or a range defined by any two of these values.

In an embodiment, a porosity of the polymer substrate is in a range of from 30% to 60%, for example, it can be 30%, 35%, 40%, 45%, 50%, 55%, 60%, or a range defined by any two of these values.

In an embodiment of the present disclosure, a secondary battery is provided, including a positive electrode plate, a negative electrode plate, and a separator positioned between the positive electrode plate and the negative electrode plate, where the separator is the one described above.

In an embodiment of the present disclosure, an electrical device is provided, including the above-mentioned secondary battery.

More specifically, the positive electrode plate includes a positive electrode current collector and a positive electrode material layer disposed on at least one surface of the positive electrode current collector, and the positive electrode material layer includes a positive electrode active material.

Specifically, the positive electrode active material can be selected from a sodium-iron composite oxide, a sodium-cobalt composite oxide, a sodium-manganese composite oxide, a sodium-nickel composite oxide, a sodium-nickel-titanium composite oxide, a sodium-nickel-manganese composite oxide, a sodium-iron-manganese composite oxide, a sodium-nickel-cobalt-manganese composite oxide, a sodium-iron phosphate, a sodium-manganese phosphate, a sodium-cobalt phosphate, a lithium nickel-cobalt-manganese oxide, a lithium-containing phosphate, and so on. However, the present disclosure is not limited to these materials; other conventional materials that can be used as positive electrode active materials in batteries can also be used. These positive electrode active materials can be used alone or in combination of two or more.

In the present disclosure, there is no particular limitation on a type of the positive electrode current collector, and it can be made of any known material suitable for use as a positive electrode current collector. In an embodiment, the positive electrode current collector includes a metallic material, such as aluminum, stainless steel, nickel plating, titanium, and tantalum, as well as a carbon material, such as a carbon cloth and a carbon paper. In an embodiment, the positive electrode current collector is made of a metallic material. In an embodiment, the positive electrode current collector is made of aluminum.

There is no particular limitation on a form of the positive electrode current collector. When the positive electrode current collector is made of a metallic material, it can be in a form of a metal foil, a metal cylinder, a metal strip or coil, a metal plate, a metal foil, an expanded metal, a stamped metal, a foamed metal, or the like. When the positive electrode current collector is made of a carbon material, the form of the positive electrode current collector can include, but is not limited to, a carbon plate, a carbon film, a carbon cylinder, or the like.

In an embodiment, the positive electrode material layer further includes a conductive agent and a binder.

In an embodiment, the secondary battery further includes a negative electrode plate, and the negative electrode plate includes a negative electrode current collector and a negative electrode active material layer disposed on at least one surface of the negative electrode current collector, where the negative electrode active material layer includes a negative electrode active material.

In the present disclosure, there is no particular limitation on the negative electrode current collector, as long as the objective of the present disclosure can be achieved. For example, the negative electrode current collector can be a copper foil, a copper alloy foil, a nickel foil, a stainless steel foil, a titanium foil, foamed nickel, foamed copper, a composite current collector, or the like.

In an embodiment, the negative electrode active material can be at least one selected from the group consisting of natural graphite, artificial graphite, a mesophase carbon microbead (MCMB), hard carbon, soft carbon, silicon, a silicon-carbon composite, SiO, a Li-Sn alloy, a Li-Sn-O alloy, Sn, SnO, SnO₂, spinel-structured lithium titanate (Li₄Ti₅O₁₂), a Li-Al alloy, and metallic lithium.

In an embodiment, the negative electrode active material layer further includes a conductive agent and a binder.

In an embodiment, there is no limitation on a type of the conductive agent mentioned in the present disclosure, and any known conductive agent may be used.

In an embodiment, the conductive agent includes at least one carbon material, such as acetylene black, needle coke, a carbon nanotube, graphene, or the like.

In an embodiment, there is no limitation on a type of the binder in the positive electrode plate and/or the negative electrode plate mentioned in the present disclosure, and any known binder may be used.

In an embodiment, the binder includes at least one selected from the group consisting of polyethylene (PE), polypropylene (PP), polyethylene terephthalate (PET), polymethyl methacrylate (PMMA), polyimide (PI), aromatic polyamide, cellulose, nitrocellulose, styrene-butadiene rubber (SBR), nitrile rubber (NBR), fluororubber, isoprene rubber, polybutadiene rubber (BR), ethylene propylene rubber (EPR), polyvinylidene fluoride (PVdF), polytetrafluoroethylene (PTFE), and fluorinated polyvinylidene fluoride.

In the secondary battery mentioned in the present disclosure, a separator is typically provided between the positive electrode plate and the negative electrode plate to prevent short circuits. There is no particular limitation on a material or a shape of the separator, as long as the effects of the present disclosure are not significantly impaired.

In an embodiment, the polyolefin is polyethylene or polypropylene. In some embodiments, the polyolefin is polypropylene. The above-mentioned materials of the separator can be used alone or in any combination.

In some embodiments, the secondary battery may include an outer packaging, which can be used to encapsulate the electrode assemblies described above and an electrolyte.

In some embodiments, the outer packaging of the secondary battery may be a rigid case, such as a rigid plastic case, an aluminum case, a steel case, etc. The outer packaging of the secondary battery may also be a soft package, such as a bag-type soft pouch. A material of the soft package can be plastic. Examples of the plastics include polypropylene (PP), polybutylene terephthalate (PBT), polybutylene succinate (PBS), or the like.

In some embodiments, there is no specific limitation on a type of the electrolyte. The electrolyte includes an electrolyte salt and an organic solvent. Specific types of the electrolyte salt and the organic solvent are not specifically limited and can be selected according to actual needs. The electrolyte may also include an additive. There is no particular limitation on a type of the additive, and the additive may be a film-forming additive for the positive electrode plate and/or the negative electrode plate, or an additive that can improve certain battery performance, such as additives that improve the high-temperature or low-temperature performance of the secondary battery.

In the present disclosure, there is no particular limitation on a shape of the secondary battery, which may be cylindrical, square, or any other arbitrary shape.

In some embodiments of the present disclosure, an electrical device is provided, including the aforementioned secondary battery, which serves as a power supply for the electrical device.

For example, the aforementioned electrical device may include a mobile device (e.g., a mobile phone, a laptop, etc.), an electric vehicle (e.g., a battery electric vehicle (BEV), a hybrid electric vehicle, a plug-in hybrid electric vehicle, an electric bicycle, an electric scooter, an electric golf cart, an electric truck, etc.), an electric train, a ship, a satellite, an energy storage system, etc., but are not limited thereto.

The present disclosure is further illustrated below with specific examples.

### Example 1

This example provides a separator, and its preparation method includes the following steps:
Preparation of a coating slurry: 70g of water and 1g of acrylonitrile multi-polymer (hereinafter referred to as LA133) were weighed and added to a planetary mixer, and stirred at 500 revolutions per minute (rpm) for 45 min, then at 50 rpm for 45 min. Then, 5g of poly(vinylidene fluoride-co-hexafluoropropylene) copolymer (hereinafter referred to as PVdF-HFP) powder was added, and a resulting mixture was stirred at 300 rpm for 15 min, then at 40 rpm for 15 min, then at 1200 rpm for 25 min, and then at 50 rpm for 25 min. After that, 4g of PVdF-HFP copolymer powder was added, and a resulting mixture was stirred at 350 rpm for 15 min, then at 35 rpm for 15 min, then at 2000 rpm for 120 min, and then at 60 rpm for 120 min. Finally, 20g of water was added, and a resulting mixture was stirred at 1500 rpm for 40 min, then at 50 rpm for 40 min to obtain a slurry. A mass ratio of the polymer to the adhesive agent was 9:1.

Application of an adhesive coating: A porous polyethylene membrane with a thickness of 7µm and a porosity of 35% was selected as a substrate. The slurry was uniformly applied onto one surface of the porous substrate, using a specially engraved micro-gravure roll. The micro-gravure roller was engraved with a specially designed pattern. Dimensions of the pattern were as follows: circular cells with a diameter of 300 µm and a depth of 5 µm, connecting bridges between the circular cells, having a width of 20 µm and a length of 0.5 mm. A coated membrane was passed through an oven at 75 °C at a line speed of 80 m/min, and then wound up to obtain the separator.

### Example 2

The difference between Example 2 and Example 1 was that in Example 2, the diameter of the organic coatings that are each in a form of a circular dot was changed by adjusting the diameter of the circular cells on the gravure roller to 50 µm.

### Example 3

The difference between Example 3 and Example 1 was that in Example 3, the diameter of the organic coatings that are each in a form of a circular dot was changed by adjusting the diameter of the circular cells on the gravure roller to 600 µm.

### Example 4

The difference between Example 4 and Example 1 was that in Example 4, the diameter of the organic coatings that are each in a form of a circular dot was changed by adjusting the diameter of the circular cells on the gravure roller to 30 µm.

### Example 5

The difference between Example 5 and Example 1 was that in Example 5, the diameter of the organic coatings that are each in a form of a circular dot was changed by adjusting the diameter of the circular cells on the gravure roller to 650 µm.

### Example 6

The difference between Example 6 and Example 1 was that in Example 6, the length of the connecting bridges was changed by adjusting the length of the connecting bridges between the circular cells on the gravure roller to 1 mm.

### Example 7

The difference between Example 7 and Example 1 was that in Example 7, the length of the connecting bridges was changed by adjusting the length of the connecting bridges between the circular cells on the gravure roller to 0.1 mm.

### Example 8

The difference between Example 8 and Example 1 was that in Example 8, the thickness of the organic coatings was changed by adjusting the depth of the circular cells on the gravure roller to 1 µm.

### Example 9

The difference between Example 9 and Example 1 was that in Example 9, the thickness of the organic coatings was changed by adjusting the depth of the circular cells on the gravure roller to 20 µm.

### Example 10

The difference between Example 10 and Example 1 was that in Example 10, the width of the connecting bridges was changed by adjusting the width of the connecting bridges between the circular cells on the gravure roller to 10 µm.

### Example 11

The difference between Example 11 and Example 1 is that in Example 11, the width of the connecting bridges was changed by adjusting the width of the connecting bridges between the circular cells on the gravure roller to 100 µm.

### Example 12

The difference between Example 12 and Example 1 is that in Example 12, the width of the connecting bridges was changed by adjusting the width of the connecting bridges between the circular cells on the gravure roller to 200 µm.

### Example 13

The difference between Example 13 and Example 1 is that in Example 13, the mass ratio of the polymer to the adhesive agent was adjusted by adjusting the amount of the polymer used in the preparation process; all other aspects remained the same.

Preparation of a coating slurry: 70 g of water and 2.5 g of acrylonitrile multipolymer (LA133) were weighed and added to a planetary mixer, and stirred at 500 rpm for 45 min, then at 50 rpm for 45 min. Then, 5g of PVdF-HFP copolymer powder was added, and a resulting mixture was stirred at 300 rpm for 15 min, then at 40 rpm for 15 min, then at 1200 rpm for 25 min, and then at 50 rpm for 25 min. After that, 2.5 g of PVdF-HFP copolymer powder was added, and a resulting mixture was stirred at 350 rpm for 15 min, then at 35 rpm for 15 min, then at 2000 rpm for 120 min, and then at 60 rpm for 120 min. Finally, 20g of water was added, and a resulting mixture was stirred at 1500 rpm for 40 min, then at 50 rpm for 40 min to obtain a slurry. A mass ratio of the polymer to the adhesive agent was 3:1.

### Example 14

The difference between Example 14 and Example 1 was that, in Example 14, an equal amount of polyvinylidene fluoride (hereinafter referred to as PVdF) was used to replace the PVdF-HFP copolymer, and all other aspects remained the same.

### Example 15

The difference between Example 15 and Example 1 was that, in Example 15, an equal amount of polymethacrylate (hereinafter referred to as PMMA) was used to replace the PVdF-HFP copolymer; all other aspects remained the same.

### Example 16

The difference between Example 16 and Example 1 was that, in Example 16, an equal amount of polyvinyl alcohol (hereinafter referred to as PVA) was used to replace the acrylonitrile multicopolymer, and all other aspects remained the same.

### Comparative Example 1

The difference between Comparative Example 1 and Example 1 was that in Comparative Example 1, a conventional full-coverage micro-gravure roller was employed to obtain organic coatings with a thickness of 5 µm.

### Comparative Example 2

The difference between Comparative Example 2 and Example 1 was that in Comparative Example 2, a connecting bridge was not included.

### Comparative Example 3

The difference between Comparative Example 3 and Example 1 was that, in Comparative Example 3, the diameter of the organic coatings that are each in a form of a circular dot was changed by adjusting the diameter of the circular cells on the gravure roller to 20 µm.

The corresponding parameters for Examples 1-16 and Comparative Examples 1-3 were shown in Table 1.

**Table 1**

| | Diameter of organic coatings in a form of a circular dot, µm | Length of connecting bridges, mm | Thickness of organic coatings, µm | Width of connecting bridges, µm | Type of polymer | Type of adhesive agent | Mass ratio of polymer to adhesive agent | Coverage area percentage of adhesive coating, % | Areal density of adhesive coating, g/m² |
|---|---|---|---|---|---|---|---|---|---|
| Example 1 | 300 | 0.5 | 5 | 20 | PVdF-HFP | LA133 | 9:1 | 17.1 | 0.50 |
| Example 2 | 50 | 0.5 | 5 | 20 | PVdF-HFP | LA133 | 9:1 | 8.6 | 0.25 |
| Example 3 | 600 | 0.5 | 5 | 20 | PVdF-HFP | LA133 | 9:1 | 29.1 | 0.85 |
| Example 4 | 30 | 0.5 | 5 | 20 | PVdF-HFP | LA133 | 9:1 | 8.8 | 0.26 |
| Example 5 | 650 | 0.5 | 5 | 20 | PVdF-HFP | LA133 | 9:1 | 30.7 | 0.90 |
| Example 6 | 300 | 1 | 5 | 20 | PVdF-HFP | LA133 | 9:1 | 8.2 | 0.24 |
| Example 7 | 300 | 0.1 | 5 | 20 | PVdF-HFP | LA133 | 9:1 | 50.5 | 1.48 |
| Example 8 | 300 | 0.5 | 1 | 20 | PVdF-HFP | LA133 | 9:1 | 17.1 | 0.12 |
| Example 9 | 300 | 0.5 | 20 | 20 | PVdF-HFP | LA133 | 9:1 | 17.1 | 2.2 |
| Example 10 | 300 | 0.5 | 5 | 10 | PVdF-HFP | LA133 | 9:1 | 15.5 | 0.45 |
| Example 11 | 300 | 0.5 | 5 | 100 | PVdF-HFP | LA133 | 9:1 | 30.1 | 0.88 |
| Example 12 | 300 | 0.5 | 5 | 200 | PVdF-HFP | LA133 | 9:1 | 46.3 | 1.35 |
| Example 13 | 300 | 0.5 | 5 | 20 | PVdF-HFP | LA133 | 3:1 | 17.1 | 0.5 |
| Example 14 | 300 | 0.5 | 5 | 20 | PVdF | LA133 | 9:1 | 17.1 | 0.5 |
| Example 15 | 300 | 0.5 | 5 | 20 | PMMA | LA133 | 9:1 | 17.1 | 0.5 |
| Example 16 | 300 | 0.5 | 5 | 20 | PVdF-HFP | PVA | 9:1 | 17.1 | 0.5 |
| Comparative Example 1 | - | - | 5 | - | PVdF-HFP | LA133 | 9:1 | 92.0 | 1.00 |
| Comparative Example 2 | 300 | - | 5 | - | PVdF-HFP | LA133 | 9:1 | 13.9 | 0.41 |
| Comparative Example 3 | 20 | 0.5 | 5 | 20 | PVdF-HFP | LA133 | 9:1 | 9.0 | 0.26 |

### Performance Testing

The separators prepared in the various examples and comparative examples were each subjected to separator adhesion testing, air permeability testing, impedance testing, and electrolyte wicking speed testing. Specific test methods were as follows:
(1) Adhesion of a separator: The separator was stacked with a positive electrode plate (a ternary nickel-cobalt-manganese (NCM) positive electrode plate) and a negative electrode plate (an artificial graphite negative electrode plate), respectively. (When the adhesive coating was coated on only one side of the substrate, for testing the adhesion between the separator and the positive electrode plate, the coated side faced the positive electrode plate; for testing the adhesion between the separator and the negative electrode plate, the coated side faced the negative electrode plate). After stacking, a hot pressing was performed under the following conditions: pressure of 3 MPa, temperature of 90 °C, and duration of 15 s. The hot-pressed positive or negative electrode plate + the separator were cut into specimens with a width of 50 mm. Then, a 180° peel test was conducted on the separator and the positive or negative electrode plate in the specimens, using an electronic tensile testing machine, so as to obtain the adhesion between the separator and the positive or negative electrode plate.
(2) Air permeability: A Gurley air permeability tester was used for testing. Specifically, under a specified pressure difference, the time required for 100cc of air to completely permeate through a separator was measured. This time was taken as a Gurley value of the separator. The higher the Gurley value, the poorer the air permeability.
(3) Impedance of a separator: A symmetric battery was assembled with a structure of "a first copper foil + a blue tape + a separator + a second copper foil" (with the organic coatings 2 of the separator always facing the second copper foil during assembly). A circular hole with a diameter of 12 mm (an actual effective area that lithium ions can pass through) was punched in a center of the blue tape. The number of the separator layers was designed to be 1, 2, 3, and 4 layers, respectively. For each number of the separator layers, 3 parallel symmetrical battery samples were prepared. After drying, these symmetrical battery samples were each filled with an electrolyte and sealed. The impedance of the symmetrical battery samples was measured using an electrochemical workstation at a frequency of from 3 MHz to 200 mHz. The impedance values obtained from the symmetric battery samples with 1, 2, 3, or 4 separator layers were subjected to linear fitting, and a slope of a fitted line was defined as the impedance of the separator.
(4) Electrolyte wicking speed of a separator: The separator was cut into strips of 100 × 15 mm, which were then fixed in an electrolyte bath at a constant height (the electrolyte contained a lithium salt, LiPF₆, at a concentration of 1 mol/L; and a solvent of the electrolyte was a mixture of ethylene carbonate (EC), ethyl methyl carbonate (EMC) and diethyl carbonate (DEC) in a mass ratio of 1:1:1). A distance that the electrolyte climbed along each of the separator strips within 30 s was recorded. This climbing distance was used to characterize the electrolyte wicking speed of the separator.

Test results were shown in Table 2.

**Table 2**

| Item | Gurley value, s/100cc | Impedance, ohm | Adhesion vs. positive electrode plate, N/m | Adhesion vs. negative electrode plate, N/m | Electrolyte wicking speed of separator, mm |
|---|---|---|---|---|---|
| Example 1 | 150 | 1.561 | 4.6 | 2.1 | 28 |
| Example 2 | 145 | 1.490 | 2.1 | 1.3 | 23 |
| Example 3 | 158 | 1.572 | 5.7 | 2.8 | 30 |
| Example 4 | 146 | 1.494 | 2.2 | 1.4 | 20 |
| Example 5 | 161 | 1.577 | 6.0 | 2.9 | 31 |
| Example 6 | 144 | 1.482 | 1.8 | 0.9 | 21 |
| Example 7 | 168 | 1.602 | 6.8 | 3.3 | 35 |
| Example 8 | 141 | 1.472 | 1.9 | 1.7 | 18 |
| Example 9 | 178 | 1.644 | 5.6 | 2.6 | 30 |
| Example 10 | 149 | 1.520 | 4.4 | 1.8 | 25 |
| Example 11 | 158 | 1.571 | 5.8 | 2.7 | 38 |
| Example 12 | 165 | 1.585 | 6.2 | 3.1 | 42 |
| Example 13 | 178 | 1.648 | 4.4 | 1.9 | 27 |
| Example 14 | 151 | 1.565 | 2.7 | 1.2 | 26 |
| Example 15 | 149 | 1.521 | 6.3 | 3.2 | 29 |
| Example 16 | 172 | 1.632 | 4.7 | 2.3 | 30 |
| Comparative Example 1 | 192 | 1.836 | 8.60 | 4.20 | 48 |
| Comparative Example 2 | 148 | 1.524 | 3.1 | 1.5 | 8 |
| Comparative Example 3 | 142 | 1.475 | 1.7 | 1.4 | 12 |

As can be seen from Table 2, the separator described in the present disclosure ensures continuous diffusion and wetting of the electrolyte on a surface of an adhesive coating, effectively improving the electrolyte wettability. The organic coatings are disposed on the surface of the separator substrate at equal intervals, causing a small blockage to the substrate. After coating, the air permeability of the separator is just slightly increased, and the hindrance to lithium-ion transport is low, which is beneficial for reducing the internal resistance of the secondary battery, improving the long-term cycling performance of the secondary battery. This also avoids the severe pore clogging issue of the adhesive coating caused by full-coverage coating, effectively improves the ionic conductivity, reduces the internal resistance of the separator, and enhances the adhesion between the separator and the electrode plates, thereby preventing misalignment or displacement of the positive electrode plate and the negative electrode plate during the production process of the secondary battery.

Finally, it should be noted that the above examples are merely intended to illustrate the technical solution of the present disclosure, rather than to limit the protection scope of the present disclosure. Although the present disclosure has been described in detail with reference to preferred examples, those skilled in the art should understand that modifications or equivalent substitutions may be made to the technical solution of the present disclosure without departing from the spirit and scope of the technical solution of the present disclosure.

## Claims

1. A separator, comprising a substrate and an adhesive coating disposed on at least one surface of the substrate;
wherein the adhesive coating comprises organic coatings and connecting bridges, the organic coatings are disposed on the at least one surface of the substrate, and two immediately adjacent organic coatings of the organic coatings are connected by the connecting bridges;
a width of the connecting bridges is smaller than a maximum dimension of the organic coatings in a width direction of the connecting bridges.

2. The separator according to claim 1, wherein each of the organic coatings is in a form of a circular dot, and the width of the connecting bridges is smaller than a diameter of the organic coatings that are each in the form of the circular dot.

3. The separator according to claim 2, wherein the diameter of the organic coatings that are each in the form of the circular dot is in a range of from 30 µm to 650 µm.

4. The separator according to claim 3, wherein the diameter of the organic coatings that are each in the form of the circular dot is in a range of from 50 µm to 600 µm.

5. The separator according to claim 1, wherein a thickness of the organic coatings is in a range of from 1 µm to 20 µm.

6. The separator according to claim 1, wherein the organic coatings are disposed on the surface of the substrate at substantially equal intervals.

7. The separator according to claim 1, wherein the width of the connecting bridges is in a range of from 20 µm to 200 µm, and a length of the connecting bridges is in a range of from 0.1 mm to 1 mm.

8. The separator according to claim 1, wherein a coverage area percentage of the adhesive coating on the at least one surface of the substrate is in a range of from 8% to 51%, and an areal density of the adhesive coating is in a range of from 0.2 g/m² to 1.5 g/m².

9. The separator according to claim 8, wherein the areal density of the adhesive coating is in a range of from 0.5 g/m² to 1.1 g/m².

10. The separator according to claim 1, wherein the adhesive coating comprises a polymer and an adhesive agent, wherein a mass ratio of the polymer to the adhesive agent is (3-9):1.

11. The separator according to claim 10, wherein the polymer comprises at least one selected from the group consisting of polyvinylidene fluoride (PVdF), a poly(vinylidene fluoride-co-hexafluoropropylene) (PVdF-HFP) copolymer, polytetrafluoroethylene (PTFE), polymethacrylate, and an acrylate copolymer derivative; and/or
a molecular structure of the adhesive agent comprises at least one polar functional group, and the polar functional group comprises at least one selected from the group consisting of C=O, -CN, -OH, -COOH, -COOLi, -COONa, -CONH-, and -NHCOO-.

12. The separator according to claim 10, wherein the adhesive agent comprises at least one selected from the group consisting of an acrylate copolymer, an acrylonitrile copolymer, polyvinyl alcohol, polyacrylamide, and polyurethane.

13. The separator according to claim 1, wherein the substrate is a polymer substrate or a composite substrate composed of a polymer substrate and a heat-resistant coating.

14. The separator according to claim 13, wherein the polymer substrate comprises at least one selected from the group consisting of a polyolefin substrate, a polyethylene terephthalate (PET) nonwoven substrate, a polyimide nonwoven substrate, and a polyvinylidene fluoride (PVdF) porous substrate.

15. The separator according to claim 13, wherein the heat-resistant coating comprises at least one selected from the group consisting of an alumina heat-resistant coating, a boehmite heat-resistant coating, a silica heat-resistant coating, a cellulose fiber heat-resistant coating, a composite heat-resistant layer composed of a cellulose fiber and alumina, a composite heat-resistant layer composed of a cellulose fiber and boehmite, an aramid heat-resistant layer, a composite heat-resistant layer composed of aramid and alumina, a composite heat-resistant layer composed of aramid and boehmite, a polyimide heat-resistant layer, a composite heat-resistant layer composed of polyimide and alumina, a composite heat-resistant layer composed of polyimide and boehmite, a zirconium oxide heat-resistant layer, an aluminum hydroxide heat-resistant layer, and a titanium dioxide heat-resistant layer.

16. The separator according to claim 13, wherein a thickness of the substrate is in a range of from 4 µm to 20 µm.

17. The separator according to claim 13, wherein a porosity of the polymer substrate is in a range of from 30% to 60%.

18. A secondary battery, comprising a positive electrode plate, a negative electrode plate, and a separator positioned between the positive electrode plate and the negative electrode plate, wherein the separator is the separator according to any one of claims 1-17.

19. An electrical device, comprising the secondary battery according to claim 18.

20. The electrical device according to claim 19, wherein the electrical device is selected from a mobile device, an electric vehicle, an electric train, a ship, a satellite, and an energy storage system.
